## Europäisches Patentamt
## European Patent Office
## Office européen des brevets

(19)

(11) Veröffentlichungsnummer: **0 204 125**
**B1**

(12) # EUROPÄISCHE PATENTSCHRIFT

(45) Veröffentlichungstag der Patentschrift:
**21.06.89**

(21) Anmeldenummer: **86105651.3**

(22) Anmeldetag: **24.04.86**

(51) Int. Cl.⁴: **C 08 G 63/68,** C 09 D 5/14,
A 01 N 55/04, B 27 K 3/15

(54) **Biozide Tributylzinnverbindungen.**

(30) Priorität: **31.05.85 DE 3519495**

(43) Veröffentlichungstag der Anmeldung:
**10.12.86 Patentblatt 86/50**

(45) Bekanntmachung des Hinweises auf die Patenterteilung:
**21.06.89 Patentblatt 89/25**

(84) Benannte Vertragsstaaten:
**BE CH DE FR GB LI NL SE**

(56) Entgegenhaltungen:
**AU-B-466 764**
**DE-A-2 458 064**
**FR-A-2 026 091**

(73) Patentinhaber: **SCHERING AKTIENGESELLSCHAFT Berlin und Bergkamen, Waldstrasse 14 Postfach 15 40, D-4709 Bergkamen (DE)**

(72) Erfinder: **Landsiedel, Horst, Augustin- Wibbelt- Strasse 18, D-4750 Unna (DE)**
Erfinder: **Plum, Hans, Dr. Dipl.- Chem., Sulkshege 12, D-4700 Hamm. (DE)**

EP 0 204 125 B1

**Beschreibung**

Tributylzinnverbindungen, z. B. Tributylzinnoxid, aber auch Tributylzinnester von Carbonsäuren, besitzen eine hohe biozide Wirkung gegen Pilze und Bakterien. Sie werden daher in großem Umfang als Wirkstoffe zur bioziden Ausrüstung von vielen Materialien und als Konservierungs- oder Desinfektionsmittel verwendet. Die biozide Wirkung der Tributylzinnverbindungen beschränkt sich nicht nur auf Mikroorganismen, sie umfaßt auch bestimmte Meeresorganismen. Diese Verbindungen verhindern daher in Antifoulingfarben einen schädlichen Bewuchs des Unterwasserschiffes mit Seepocken, Muscheln oder Algen.

Ein bedeutendes Anwendungsgebiet für Triorganozinnverbindungen ist der Schutz von frisch geschlagenem oder verbautem Holz vor Befall durch holzschädigende Pilze. Aufgrund ihrer starken Wirksamkeit und ihres breiten Wirkungsspektrums werden Tributylzinnverbindungen in großem Umfang als Fungizide in Holzschutzmitteln eingesetzt.

Bei diesen Organozinnverbindungen handelt es sich im wesentlichen um Lösungen von Tri-n-butylzinnoxid bzw. Tri-n-butylzinnestern organischer Säuren wie Tri-n-butylzinnbenzoat, -linoleat oder -naphthenat in organischen Lösungsmitteln. Doch lassen sich mit Hilfe von Emulgatoren auch wäßrige Tributylzinnzubereitungen herstellen. Die Tributylzinnverbindungen sind bereits in sehr niedrigen Konzentrationen wirksam.

Maßgebend für die Wirksamkeit der verschiedenen Tributylzinnverbindungen ist in der Regel der Zinngehalt. Da dieser bei Tributylzinnestern langkettiger Carbonsäuren niedriger liegt als bei Tributylzinnoxid, müssen bei Verwendung derartiger Ester zur Erzielung der gleichen Wirkung entsprechend höhere Mengen aufgewendet werden.

Eine spezifische, von der Natur der verwendeten Carbonsäure abhängige biozide Wirkung ist daher bei Tributylzinnverbindungen nicht bekannt geworden.

Die biozide Wirkung von Holzschutzmitteln läßt sich durch die sogenannten Grenzwerte ausdrücken, wobei der untere Wert die Konzentration darstellt, bei der gerade noch ein Pilzangriff erfolgt und der obere die Konzentration ist, bei der kein Angriff mehr erfolgt.

So liegen die Grenzwerte nach DIN 52 176 gegen einen typischen holzzerstörenden Pilz (Coniophora puteana) für

Tri-n-butylzinnoxid bei 0,34 - 0,70 kg/m³ Holz und für
Tri-n-butylzinnlinoleat entsprechend höher bei 0,92 - 1,3 kg/m³.

Von großer Bedeutung für die Verwendbarkeit von Bioziden als Holzschutzmittel ist ihre Dauerbeständigkeit. Die Mittel sollen dem damit behandelten Holz einen möglichst lang anhaltenden Schutz gegen mikrobiellen Angriff verleihen. Grundsätzlich handelt es sich bei Tributylzinnverbindungen um recht beständige Stoffe, mit denen man Holzschutzmittel mit guter Dauerwirkung herstellen kann. Unter bestimmten Bedingungen, wie höhere Temperatur bzw. Einwirkung spezieller Holzinhaltsstoffe, können sie aber unter Abspaltung von Butylgruppen zu biologisch weniger wirksamen zinnorganischen Verbindungen abgebaut werden.

Ein wesentlicher Faktor für die Beständigkeit von Holzschutzmitteln ist die thermische Beständigkeit der Wirkstoffe. Biozid ausgerüstetes Holz, das der Witterung ausgesetzt ist, kann bei Sonnenbestrahlung über einen längeren Zeitraum auf über 70° C aufgeheizt werden.

Es wurde nun überraschend gefunden, daß sich Umsetzungsprodukte von Tri-n-butylzinnoxid oder Tri-n-butylzinnhalogenid, z. B. Chlorid, mit Polyesterpolyolen oder Polyesterpolyätherpolyolen mit einem mittleren Molgewicht im Bereich von 200 - 5.000 durch eine sehr hohe Beständigkeit in damit ausgerüstetem Holz auszeichnen, die erheblich über der der bisher im Holzschutz viel verwendeten Verbindungen Tri-n-butylzinnoxid (TBTO), Tri-n-butylzinnnaphthenat (TBTN) oder Tri-n-butylzinnlinoleat (TBTL) liegt.

Gegenstand der Erfindung sind demnach die genannten Umsetzungsprodukte sowie biozide Mittel, insbesondere für den Holzschutz, die als aktive Komponente eines oder mehrere der Umsetzungsprodukte enthalten.

Als erfindungsgemäß einzusetzende Polyolkomponente kommen die nach bekannten Verfahren hergestellten Kondensationsprodukte aus aliphatischen, cycloaliphatischen oder aromatischen Carbonsäuren mit ≥ 2 Carboxylgruppen pro Mol mit einem Überschuß von Alkoholen mit ≥ 2 Hydroxylgruppen pro Mol in Betracht, wobei die Mengen der Einsatzkomponenten und die Reaktionsbedingungen so gewählt werden, daß die mittleren Molgewichte im Bereich von 200 - 5.000, insbesondere 400 - 2.000, liegen.

Als Carbonsäuren bzw. deren Derivate werden insbesondere die für die Herstellung der handelsüblichen Polyester üblichen Verbindungen verwendet, wie Phthalsäure, Isophthalsäure, Adipinsäure, Azelainsäure, Sebazinsäure, Dodekandisäure, Hexahydrophthalsäure.

Als lineare oder verzweigte Polyolkomponente werden bevorzugt eingesetzt Äthylenglykol, 1,2-Propandiol, 1,3-Propandiol, 1,4-Butandiol, 1,4-Bis(hydroxymethyl)cyclohexan, Neopentylglykol, 1,6-Hexandiol, Diäthylenglykol, Triäthylenglykol, 1,1,1-Trinethyloläthan, 1,1,1-Trimethylolpropan, Glycerin, 1,2,6-Hexantriol sowie die durch Copolymerisation, Blockcopolymerisation oder anionische Polymerisation von Alkylenoxiden, wie Äthylenoxid und Propylenoxid, mit den genannten Alkoholen als Starterkomponenten oder die durch kationische Polymerisation und Copolymerisation cyclischer Äther wie Tetrahydrofuran, Äthylenoxyd und Propylenoxid mit sauren Katalysatoren oder durch Polykondensation von polykondensierbaren Glykolen wie 1,6-Hexandiol in Gegenwart saurer Verätherungskatalysatoren nach üblichen Verfahren erhältlichen Verbindungen. Weiterhin sind Hydroxycarbonsäuren bzw. deren Lactone, wie p-Hydroxybenzoesäure, 1,6-Hydroxycapronsäure bzw. ε-Caprolacton, verwendbar.

Die genannten Komponenten können sowohl allein als auch in Mischung eingesetzt werden, so daß entsprechend den jeweiligen Wünschen bzw. Anforderungen der Praxis sowohl Polyesterpolyole als auch Polyesterpolyätherpolyole hergestellt werden können.

Die Polyesterpolyole, Polyesterpolyätherpolyole sowie deren Mischungen werden, gegebenenfalls unter Mitverwendung von den o. a. Polyätherpolyolen, nach an sich bekannten Bedingungen mit den Tributylzinnverbindungen umgesetzt, indem man diese Polyole mit im wesentlichen stöchiometrischen Mengen Tri-n-butylzinnoxid in geeigneten Lösungsmitteln, wie Xylol oder Toluol, unter Rückfluß erhitzt und das Reaktionswasser anschließend azeotrop abdestilliert.

Wird als Ausgangsprodukt Tri-n-butylzinnchlorid eingesetzt, wird die entstehende wäßrige Salzsäure azeotrop entfernt.

Aufgrund ihrer ausgezeichneten bioziden Eigenschaften und ihrer hohen Beständigkeit verleihen die erfindungsgemäßen Verbindungen damit ausgerüsteten Materialien eine hohe biozide Dauerwirkung. Sie können daher als Wirkstoff in Holz- und Textilschutzmitteln, Desinfektionsmitteln oder auch zur Konservierung von Farben, Leimen, Dichtungsmitteln und Bohrölen sowie als Antifoulingwirkstoffe eingesetzt werden.

Zur Erweiterung des Wirkungsspektrums oder zur Erzielung besonderer Effekte lassen sich die erfindungsgemäßen Wirkstoffe mit weiteren Wirkstoffen kombinieren.

**Herstellungsbeispiele**

**Beispiel 1**

1 Mol Tri-n-butylzinnoxid (598 g) und 790 g des hydroxylgruppenhaltigen Polyesterpolyols Desmophen®[1] 670 (Hydroxylgehalt ca. 4,3 %, Äquivalentgewicht ca. 395) werden mit 1.500 ml Toluol unter Rückfluß erhitzt. Innerhalb von 4 h wird das entstandene Reaktionswasser azeotrop abdestilliert. Nach Abtrennung des Toluols erhält man als Rückstand ein gelbliches, mittelviskoses Produkt mit einem Zinngehalt von 17,0 %. Diese Tributylzinnverbindung ist in organischen Lösungsmitteln wie Alkoholen, Ketonen, chlorierten Kohlenwasserstoffen und Benzinen leicht löslich, in Wasser dagegen schwer löslich.

(1) = Desmophen ist ein Warenzeichen der Fa. Bayer AG Leverkusen.

**Beispiel 2**

1 Mol Tri-n-butylzinnoxid (598 g) und 400 g des hydroxylgruppenhaltigen Polyesterpolyols Desmophen® 850 mit einem Äquivalentgewicht von 200 (Hydroxylgehalt ca. 8,5 %) werden mit 1.000 ml Xylol unter Rückfluß erhitzt. Innerhalb von etwa 4 Stunden wird das Reaktionswasser azeotrop abdestilliert. Nach Abtrennung des Xylols erhält man als Rückstand ein gelbes, mittelviskoses Produkt mit einem Zinngehalt von 23,6 %. Diese Tributylzinnverbindung ist in organischen Lösungsmitteln wie Alkoholen, Ketonen, chlorierten Kohlenwasserstoffen und Benzinen leicht, in Wasser jedoch unlöslich.

**Beispiel 3**

1 Mol Tri-n-butylzinnoxid (598 g) und 680 g des hydroxylgruppenhaltigen Polyesterpolyätherpolyols Desmophen® 1150 mit einem Äquivalentgewicht von 340 (Hydroxylgehalt ca. 5,0 %) werden mit ca. 2.000 ml Xylol unter Rückfluß erhitzt. Innerhalb von ca. 4 Stunden wird das entstandene Reaktionswasser azeotrop abdestilliert. Nach Abtrennung des Xylols erhält man als Rückstand ein gelbliches, viskoses Produkt mit einem Zinngehalt von 18,4 %. Diese Tributylzinnverbindung ist in organischen Lösungsmitteln wie Alkoholen, Ketonen, chlorierten Kohlenwasserstoffen und Benzin leicht löslich, in Wasser dagegen schwer löslich.

**Formulierungsbeispiele**

**Beispiel 1**

Eine farblose, wenig Bindemittel enthaltende Holzschutzgrundierung, bestehend aus

| | | | |
|---|---|---|---|
| 2,0 | Gew. -Tl. | | Reaktionsprodukt aus Herstellungsbeispiel 1 |
| 0,2 | " | " | Permethrin 25 - 75 |
| 6 | " | " | Diäthylenglykolmonobutyläther |
| 7 | " | " | langöliges Alkydharz (ca. 33 % Phthalatharz, ca. 67 % Triglyceride pflanzlicher Fettsäuren) |
| 84,8 | " | " | White spirit |

zeigt ein gutes Eindringvermögen und läßt sich sehr gut als Holzschutzgrundierung für Bauholz verwenden.

**Beispiel 2**

Eine farbige Holzschutz-Lasur, bestehend aus

| | | | |
|---|---|---|---|
| 3 | Gew. -Tl. | | Reaktionsprodukt aus Herstellungsbeispiel 1 |
| 40 | " | " | Langöliges Alkydharz (ca. 33 % Phthalatharz, ca. 67 % Triglyceride pflanzlicher Fettsäuren) |
| 0,5 | " | " | Sikkative (Co-, Mn-, Pb-Salze) |
| 0,6 | " | " | Antiabsetzmittel |
| 9,0 | " | " | Eisenoxidrotpaste |
| 1,0 | " | " | Eisenoxidschwarzpaste |
| 6,6 | " | " | Diäthylenglykolmonobutyläther |
| 39,3 | " | " | White spirit. |

**Beispiel 3**

Eine wasserverdünnbare Wirkstoffkombination, bestehend aus

| | | | |
|---|---|---|---|
| 18 | Gew. -Tl. | | Reaktionsprodukt aus Herstellungsbeispiel 2 |
| 4,5 | " | " | N,N'-Dimethyl-N-phenyl-N'-fluordichlormethylthiosulfonyldiamid |
| 77,5 | " | " | nichtionogener Emulgator |

läßt sich in weiten Bereichen (1 : 5 bis 1 : 50) mit Wasser verdünnen und ergibt stabile Emulsionen zum Streichen, Spritzen oder Tauchen von z. B. frisch geschlagenem Holz. Die unverdünnte Formulierung wird in Konzentrationen von 0,2 bis 3 Gew.-% zur bioziden Ausrüstung von wässrigen Anstrichsystemen, z. B. Dispersionen auf Acrylatßasis, eingesetzt.

**Beispiel 4**

Eine Wirkstofflösung zur bioziden Ausrüstung von Textilien, z. B. Baumwollsegeltuch, bestehend aus

| | | | |
|---|---|---|---|
| 2,5 | Gew. -Tl. | | Reaktionsprodukt aus Herstellungsbeispiel 3 |
| 3,6 | " | " | mikronisiertes Polyethylenwachs |
| 93,9 | " | " | geruchsarmes, synthetisches Isoparaffin |

läßt sich entweder durch Sprühen der Lösung oder durch Tauchen der zu behandelnden Materialien aufbringen.

**Untersuchung der Beständigkeit in Holz**

Die Dauerbeständigkeit von biziden Holzschutzmitteln läßt sich in Lagerversuchen bestimmen. Hierbei werden Holzklötzchen aus Kiefernsplintholz in den Größen 5,0 x 2,5 x 1,5 cm mit Lösungen der zu prüfenden Biozide getränkt und nach dem Verdunsten des Lösungsmittels 4 Wochen bei 20°C und anschließend 2 Wochen bei 80°C gelagert. Danach zerkleinert man die Holzklötzchen und extrahiert 24 h mit Äthanol/HCl-lösung (+ 0,3 % HCl). In den Extrakten werden sowohl Gesamtzinn als auch der Tributylzinngehalt bestimmt.

Ergebnisse solcher Lagerversuche sind in Tabelle 1 aufgeführt.

**Tabelle 1**

Abbau der Tributylzinnverbindung in Holz

| Tränklösung | aufgenommene Menge Sn | TBT-Gehalt der Aus-gangstoffe | Extrakt | |
| --- | --- | --- | --- | --- |
| | | | Gesamtzinnge-halt | TBT-Gehalt der Extrak-te |
| TBTO | 28,0 mg | 97,0 % | 26,9 mg | 40,0 % |
| TBTN | 27,0 mg | 95,0 % | 24,7 mg | 47,0 % |
| TBTL | 28,5 mg | 98,0 % | 27,7 mg | 48,0 % |
| TBT-Verbindung (Beispiel 1) | 26,7 mg | 96,2 % | 25,5 mg | 79,0 % |
| TBT-Verbinding (Beispiel 2) | 27,1 mg | 97,1 % | 28,2 mg | 81,2 % |
| TBT-Verbindung (Beispiel 3) | 27,6 mg | 97,5 % | 27,2 mg | 80,5 % |

Während bei Verwendung der Tributylzinnverbindungen TBTO, TBTN und TBTL infolge der Belastung durch den Lagerversuch eine Abnahne der Tributylzinngehalte bis auf 40 - 48 % zu beobachten ist, ist der Abbau der Tributylzinnverbindungen im Sinne der vorliegenden Erfindung wesentlich geringer. Es sind nach dem Lagertest noch ca. 80 % Tributylzinnverbindung erhalten geblieben.

**Biozide Wirkung**

Die erfindungsgemäßen Verbindungen zeigen eine hohe biozide Wirkung gegen zahlreiche Bakterien und Pilze (Tabelle 2).

Zur Bestimmung der biziden Wirkung werden Papierrundfilter mit einem Durchmesser von 5,5 cm in abgestuften Konzentrationen der Tributylzinnverbindung in Äthanol getränkt und nach dem Trocknen im Agar-Auflegetest gegen Pilze und Bakterien getestet. Als Maß für die biozide Wirkung dient die Größe der Hemmzonen um die Proben (Breite der bewuchsfreien Zone in mm).

**Tabelle 2**

Biozide Wirkung der Tributylzinnverbindungen (Agar-Auflegetest)
(Hemmzonen um die Proben in mm)

| | | Bakterien | | | | Pilze | | |
|---|---|---|---|---|---|---|---|---|
| Wirkstoff | Gew.-% in Tränk- lösg.* | Bacillus subtilis | Bacillus mesent. | Proteus vulgaris | Poria mont. | Cladosp. herbarum | Aureobas pullulans | Trichoderma viride |
| TBTO | 0,5 | 2 - 3 | 3 - 4 | 0 - 1 | 5 - 7 | 3 - 4 | 1 - 2 | 0 - 1 |
| | 1,0 | 5 - 7 | 5 - 6 | 2 - 3 | 8 - 10 | 6 - 8 | 3 - 4 | 2 - 3 |
| | 1,5 | 10 - 12 | 10 - 12 | 4 - 5 | 12 - 15 | 8 - 10 | 5 - 6 | 4 - 6 |
| TBTL | 1,0 | 1 - 2 | 2 - 3 | 0 | 3 - 4 | 1 - 2 | 0 - 1 | 0 |
| | 2,0 | 3 - 4 | 3 - 4 | 1 - 2 | 5 - 7 | 4 - 5 | 1 - 2 | 0 - 1 |
| | 3,0 | 5 - 7 | 8 - 10 | 2 - 3 | 8 - 10 | 6 - 8 | 2 - 3 | 2 - 3 |
| TBT-Verb. (Beisp.1) | 1,0 | 1 - 2 | 1 - 2 | 0 | 1 - 2 | 0 | 0 - 1 | 0 |
| | 2,0 | 2 - 3 | 2 - 3 | 1 - 2 | 2 - 3 | 2 - 3 | 1 - 2 | 0 - 1 |
| | 3,0 | 4 - 6 | 6 - 8 | 2 - 3 | 6 - 8 | 5 - 7 | 2 - 4 | 1 - 2 |
| TBT-Verb. (Beisp.2) | 1,0 | 1 - 2 | 2 - 3 | 0 - 1 | 2 - 3 | 1 | 0 - 1 | 0 - 1 |
| | 2,0 | 4 - 5 | 3 - 4 | 1 - 2 | 3 - 4 | 2 - 3 | 2 - 3 | 1 - 2 |
| | 3,0 | 6 - 8 | 7 - 8 | 2 - 3 | 5 - 6 | 4 - 5 | 3 - 4 | 2 - 3 |
| TBT-Verb. (Beisp.3) | 1,0 | 1 - 2 | 2 - 3 | 1 | 4 - 5 | 1 - 2 | 1 - 2 | 1 - 2 |
| | 2,0 | 3 - 4 | 3 - 4 | 2 - 3 | 5 - 7 | 3 - 4 | 2 - 3 | 2 - 3 |
| | 3,0 | 6 - 7 | 5 - 6 | 3 - 4 | 8 - 10 | 5 - 7 | 4 - 5 | 3 - 4 |
| ohne | - | 0 | 0 | 0 | 0 | 0 | 0 | 0 |

**Patentansprüche**

1. Tri-n-butylzinn-Produkte, erhältlich durch Umsetzung von Tri-n-butylzinnoxid oder Tri-n-butylzinnhalogenid mit Polyesterpolyolen oder Polyesterpolyätherpolyolen mit einem mittleren Molgewicht in Bereich von 200 - 5.000.

2. Biozides Mittel, dadurch gekennzeichnet, daß es als aktiven Wirkstoff eines oder mehrere der Umsetzungsprodukte nach Anspruch 1 enthält.

3. Verwendung von Verbindungen genäß den Ansprüchen 1 und 2 zur Bekämpfung von Bakterien, Pilzen, Algen und Unterwasserbewuchsorganismen.

4. Verwendung von Verbindungen gemäß den Ansprüchen 1 und 2 im Holzschutz zur Bekämpfung von holzschädigenden Mikroorganismen.

**Claims**

1. Tri-n-butyltin products, obtainable by reaction of tri-n-butyltin oxide or a tri-n-butyltin halide with polyester polyols or polyester polyether polyols having an average molecular weight in the range of from 200 to 5000.

2. Biocidal agent, characterised in that it contains as active ingredient one or more of the reaction products according to claim 1.

3. The use of compounds according to claims 1 and 2 for controlling bacteria, fungi, algae and organisms growing underwater.

4. The use of compounds according to claims 1 and 2 in wood preservation for controlling wood-damaging microorganisms.

**Revendications**

1. Produits tri-n-butyl-stanniques que l'on peut obtenir en faisant réagir l'oxyde de tri-n-butyl-étain ou un halogénure de tri-n-butyl-étain avec des polyester-polyols ou des polyester-polyéther-polyols ayant une masse moléculaire moyenne située dans l'intervalle allant de 200 à 5 000.

2. Produit biocide caractérisé en ce qu'il contient, comme matière active, un ou plusieurs des produits réactionnels selon la revendication 1.

3. Application de produits selon l'une des revendications 1 et 2 à la lutte contre des bactéries, des mycètes, des algues et des organismes qui provoquent la salissure d'objets immergés.

4. Application de produits selon l'une des revendications 1 et 2 dans la protection du bois pour combattre des micro-organismes déprédateurs du bois.